# EUROPEAN PATENT APPLICATION

(11) **EP 1 991 004 A2**
(43) Date of publication of application: **12.11.2008**
(21) Application number: 07121496.9
(22) Date of filing: 26.11.2007
(51) Int. Cl.: H04N 7/26, H04N 7/50

(54) **Method and apparatus for encoding and decoding video images**

(30) Priority: 28.11.2006 KR 20060118547
(71) Applicant: Samsung Electronics Co., Ltd, Suwon-si, Gyeonggi-do 442-742 (KR)
(72) Inventor: Lee, Jae-hun, Gyeonggi-do (KR); Ahn, Tae-gyoung, Gyeonggi-do (KR); Yoo, Ki-won, Seoul (KR)
(74) Representative: Walaski, Jan Filip

(57) **Abstract**

A method of and apparatus for encoding and/or decoding an image are provided, in which motion estimation and compensation are performed by using a reference background image and a reference object image extracted from an input image frame. In the method and apparatus, a background image of each of input image frames is used, and a background area which any one image frame lacks is updated by using a background image of another image frame. In this way, a reference background image is generated and stored, and an object image in each image frame is stored as a reference object image. Then, by using the stored reference background images and reference object images, motion estimation and compensation are performed, thereby increasing encoding efficiency.

## Description

The present invention relates to encoding and decoding of video images, and more particularly, to a method of and apparatus for encoding and decoding video images, in which a background image of each of input image frames is used, and a background area which any one image frame lacks is updated by using a background image of another image frame, thereby generating and storing a reference background image, and an object image in each image frame is stored as a reference object image, and then, by using the stored reference background images and reference object images, motion estimation and compensation are performed.

In ITU-T H.264/MPEG-4 Advanced Video Coding (AVC) video codec, a prediction block is obtained by performing prediction in relation to sample data in units of blocks, and the prediction block is transformed and quantized, thereby compressing the video data.

There are two types of prediction methods, intra prediction and inter prediction. In the case of intra prediction, prediction is performed, by using data of restored neighboring blocks which exist in a current slice, and are already encoded and decoded. In the case of inter prediction, a prediction image is generated from one or more video frames or fields previously encoded by using block-based motion compensation. In particular, distinctively from previous video compression standards, H.264 supports a variety of block sizes (from 16x16 to 4x4), and detailed sub sample motion vectors. A main profile and an extended profile support a B-slice and weighted prediction video data which is compressed through prediction, transform and quantization, is further compressed through an entropy encoding process, and a bitstream is generated.

When a moving object exists in an image frame, an area may appear in a current image frame which does not appear in a previous image frame. An example is the background which is hidden by the moving object in a previous image frame and which newly appears in the current image frame. In the conventional MPEG-2 or MPEG-4, when inter prediction of a P picture is performed, motion prediction and compensation are performed by using only an I picture or P picture positioned immediately before. However, in H.264, in order to increase encoding efficiency, motion prediction and compensation are performed by using a plurality of reference image frames. That is, according to the H.264 standard, a number of image frames which are recently encoded, the number being equal to or greater than 1 and equal to or less than 16, are stored, and by using all reference image frames, motion prediction is performed. Then, a reference image frame having a lowest cost is determined as a reference image frame of a block in which motion estimation is currently desired to be performed. This is because it is highly probable that when a plurality of reference image frames are used, some part of the background which is hidden and does not appear in an image frame immediately before the current frame, is not hidden by a moving object and appears in other image frames prior to the image frame immediately before the current image frame.

However, when a plurality of reference image frames are used, a problem arises in which the amount of computation in a motion prediction unit and the space of a memory for storing reference image frames increase in proportion to the number of reference image frames.

Meanwhile, because of the amount of computation required for motion estimation, motion estimation is performed in a search area of a predetermined size centered around the position of a reference image frame corresponding to the position of an object area of a current image frame. In this case, when a moving object moves very suddenly, an area of the image in which motion occurs is positioned beyond a search area in the reference image frame, such that a prediction image cannot be formed through motion estimation. In the case of an object which repeatedly moves in the horizontal direction or the vertical direction, an area similar to the moving object can be found in a search area range of a reference image which is positioned much earlier in time. However, since the number of usable reference image frames is limited as described above, there are some cases in which a prediction image cannot be formed through motion estimation.

In addition, when the shape of a moving object varies in a predetermined cycle but predetermined shapes of the object are repeated in the cycle, for example, as in the case of a walking person, when the shape of the person varies in each frame, but predetermined motions are repeated in a predetermined cycle, motion estimation of the moving object can be performed, by using a plurality of reference image frames, thereby increasing the efficiency of encoding. However, due to the amount of computation required for motion estimation and the limitation of a memory space, the number of reference image frames that can be used is limited.

The present invention provides a method of and apparatus for encoding and decoding an image, in which a background image of each of input image frames is used, and a background area which any one image frame lacks is updated by using a background image of another image frame, thereby generating and storing a reference background image, and an object image in each image frame is stored as a reference object image, and then, by using the stored reference background images and reference object images, motion estimation and compensation are performed, thereby increasing encoding efficiency without a need to greatly increase the size of a memory.

According to an aspect of the present invention, there is provided a method of encoding an image including: dividing a current image frame into a background area and an object area; comparing the current image frame with a previous image frame, thereby determining whether a background area or an object area has changed between the current image frame and the previous image frame; according to the result of the determination, updating a reference background image which is generated from the backgrounds of previous image frames, by using the background area of the current image frame, and storing the updated reference background image; and performing motion estimation of an image frame subsequent to the current image frame by using the updated reference background image.
According to another aspect of the present invention, there is provided an apparatus for encoding an image including: an area separation unit dividing a current image frame into a background area and an object area; a determination unit comparing the current image frame with a previous image frame, thereby determining whether a background area or an object area changes between the current image frame and the previous image frame; an update unit updating a reference background image which is generated from the backgrounds of previous image frames, by using the background area of the current image frame, according to the result of the determination, and storing the updated reference background image; and a motion estimation unit performing motion estimation of an image frame subsequent to the current image frame, by using the updated reference background image.

According to another aspect of the present invention, there is provided a method of decoding an image including: separating a background area and an object area from each of at least two image frames, including a first image frame and a second image frame, restored before a current image frame is decoded; comparing the restored first image frame and second image frame, and determining whether or not a background area or an object area changes between the first image frame and the second image frame; according to the result of the determination, updating a reference background image which is generated from the background areas of previously restored image frames, by using the backgrounds of the first image frame and the second image frame, and storing the updated reference background image; and by using the updated reference background image, performing motion compensation of the current image frame.

According to another aspect of the present invention, there is provided an apparatus for decoding an image including: an area separation unit separating a background area and an object area from each of at least two image frames, including a first image frame and a second image frame, restored before a current image frame is decoded; a determination unit comparing the restored first image frame and second image frame, and determining whether or not a background area or an object area changes between the first image frame and the second image frame; an update unit updating a reference background image which is generated from the background areas of previously restored image frames, by using the backgrounds of the first image frame and the second image frame, according to the result of the determination; a storage unit storing the updated reference background image; and a motion compensation unit performing motion compensation of the current image frame, by using the updated reference background image.

The above and other features and advantages of the present invention will become more apparent by describing in detail exemplary embodiments thereof with reference to the attached drawings in which:
FIGS. 1A through 1C are diagrams illustrating examples of sequential image frames input to an apparatus for encoding an image according to an embodiment of the present invention;
FIG. 2A is a diagram illustrating an example of a reference background image according to an embodiment of the present invention generated by using image frames illustrated in FIGS. 1A through 1C;
FIG. 2B is a diagram illustrating an example of a reference object image according to an embodiment of the present invention extracted from image frames illustrated in FIGS. 1A through 1C;
FIG. 3 is a block diagram illustrating a structure of an apparatus for encoding an image according to an embodiment of the present invention;
FIG. 4 is a detailed block diagram illustrating a structure of a reference image generation unit according to an embodiment of the present invention;
FIG. 5 is a diagram illustrating examples of two image frames sequentially input to an apparatus for encoding an image according to an embodiment of the present invention;
FIGS. 6A and 6B are diagrams illustrating a background image and an object image, respectively, which are separated from an image frame input at an arbitrary time (t-1) of the image frames illustrated in FIG. 5 according to an embodiment of the present invention;
FIGS. 6C and 6D are diagrams illustrating a background image and an object image, respectively, which are separated from an image frame input at a time t of the image frames illustrated in FIG. 5 according to an embodiment of the present invention;
FIG. 7 is a flowchart illustrating a method of encoding an image according to an embodiment of the present invention;
FIG. 8 is a block diagram illustrating a structure of an apparatus for decoding an image according to an embodiment of the present invention; and
FIG. 9 is a flowchart illustrating a method of decoding an image according to an embodiment of the present invention.

The present invention will now be described more fully with reference to the accompanying drawings, in which exemplary embodiments of the invention are shown.

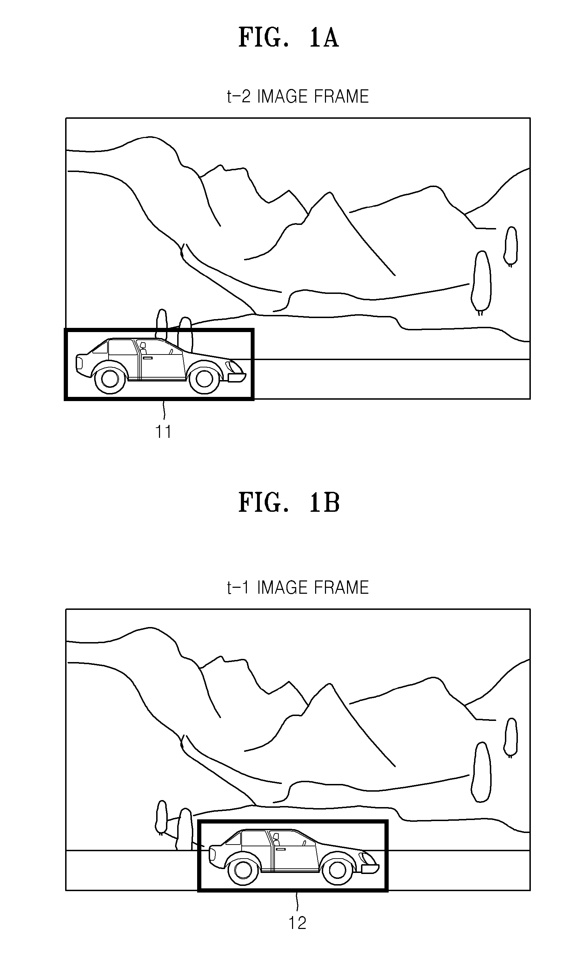

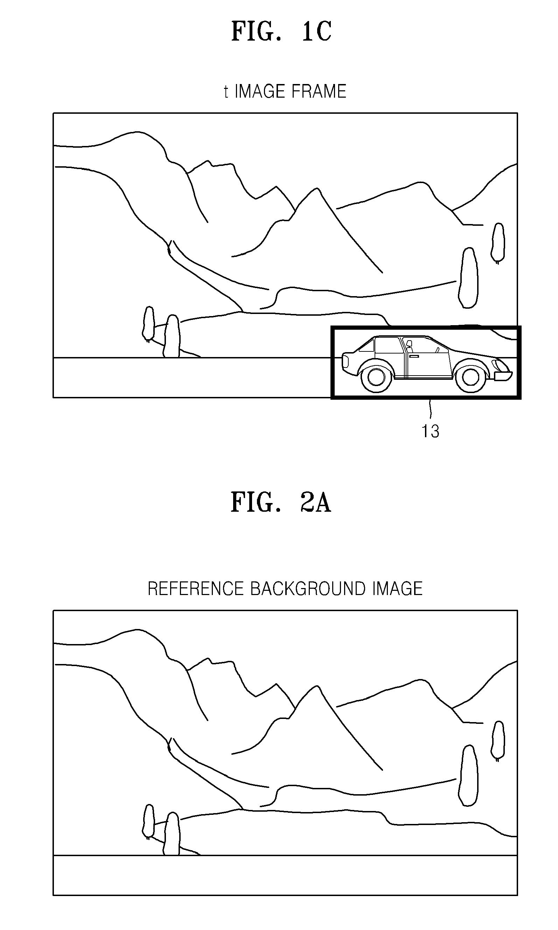

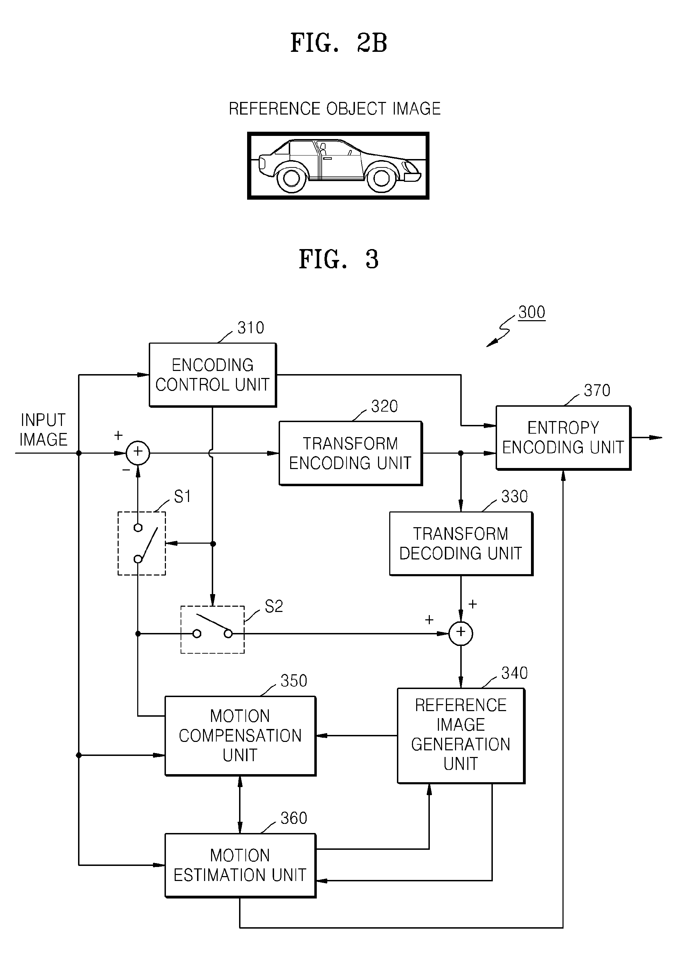

FIGS. 1A through 1C are diagrams illustrating examples of image frames sequentially input to an apparatus for encoding an image according to an embodiment of the present invention. FIG. 2A is a diagram illustrating an example of a reference background image according to an embodiment of the present invention generated by using image frames illustrated in FIGS. 1A through 1C, and FIG. 2B is a diagram illustrating an example of a reference object image according to an embodiment of the present invention generated by using image frames illustrated in FIGS. 1A through 1C.

A background area hidden by an object in an image frame at an arbitrary time may be exposed as the object moves, and in an image frame at another time, information on the previously hidden background area can be obtained. For example, referring to FIGS. 1A through 1C, a background area 11 is hidden by a car in an image frame at a time (t-2). However, with the car moving in the horizontal direction, the background area 11 can be obtained in an image frame at a next time (t-1).

Similarly, a background area 12 hidden by the car in the image frame at the time (t-1) can be obtained in the image frame at the previous time (t-2) or in the image frame at the following time t.

According to the conventional technology as described above, when motion of a background image hidden by a moving object is estimated, a plurality of reference image frames which are previously encoded and then restored, are used. That is, in order to predict an area most similar to each block in a current image frame, motion estimation using a plurality of reference image frames is performed, thereby forming a predicted image.

Referring to FIGS. 2A and 2B, in a method of and apparatus for encoding and decoding an image according to embodiments of the present invention, when motion estimation and compensation in relation to input image frames illustrated in FIGS. 1A through 1C are performed, an area of the background hidden by a moving object or the like, is obtained by using the background of other previous image frames which have already been encoded, thereby generating a reference background image which is formed of only a background image. Also, an object image detected in a previous image frame is stored as a reference object image. Then, by using the stored reference background image and reference object image, motion estimation and compensation are performed, thereby increasing encoding efficiency.

FIG. 3 is a block diagram illustrating a structure of an apparatus for encoding an image according to an embodiment of the present invention.

Referring to FIG. 3, the apparatus for encoding an image 300 according to the current embodiment includes an encoding control unit 310, a transform encoding unit 320, a transform decoding unit 330, a reference image generation unit 340, a motion compensation unit 350, a motion estimation unit 360, and an entropy encoding unit 370.

An input image is formed of blocks obtained by dividing a frame or frames into areas of a predetermined size, wherein the frame or frames are input from a predetermined image pickup device, such as a camera, at predetermined time intervals. The frame includes a sequential scanning frame obtained by a sequential scanning method, and a field or an interlaced scanning frame obtained by an interlaced scanning method. Image data which will be explained hereinafter includes a sequential scanning frame, an interlaced scanning frame, a field, a picture of a block structure, and a partition unit obtained by dividing a frame into areas of a predetermined size.

If image data is input, the encoding control unit 310 determines a coding-type (intra coding or inter coding) according to whether to perform motion compensation of the input image, and outputs a control signal corresponding to the determination, to a first switch (S1). When motion compensation is performed, image data which is input before or after the current input image is required, and the first switch (S1) is closed. When motion compensation is not performed, image data which is input before or after is not required, and the first switch (S1) is opened. If the first switch (S1) is closed, a difference image data (residue) obtained from the input image and a previous or following image is input to the transform encoding unit 320. If the first switch (S1) is opened, only the input image is input to the transform encoding unit 320. The transform encoding unit 320 quantizes transform coefficient values which are obtained by transform-encoding the input image data, according to a predetermined quantization step, and obtains N x M data which is 2-dimensional (2D) data formed of quantized transform coefficient values. An example of the used transform is discrete cosine transform (DCT). Quantization is performed according to the predetermined quantization step.

Meanwhile, since the image data which is input to and encoded in the transform encoding unit 320 can be used as reference data for motion compensation of following input image data, transform decoding unit 330 performs a process of inverse quantization and inverse transform encoding of the image data and then, the result is input to the reference image generation unit 340.

The reference image generation unit 340 stores an image frame which is previously encoded, and then restored, as a reference image frame. Also, as will be described later, the reference image generation unit 340 divides each of the image frames which are previously encoded, and then restored, into a background area and an object area. The reference image generation unit 340 generates a reference background image, by obtaining an area of the background which any one image frame lacks, by using a background area of another image frame. Also, the reference image generation unit 340 separately stores a separated object area, as a reference object image.

If the data output from the transform decoding unit 330 is difference image data, the encoding control unit 310 closes a second switch (S2) so that the difference image data output from the transform decoding unit 330 can be added to an output from the motion compensation unit 350, and then, the added result can be input to and stored in the reference image generation unit 340 such that the result can be used as a reference image frame for a following image frame.

The motion estimation unit 360 compares input image data with data stored in the reference image generation unit 340, thereby finding data most similar to the currently input data, and then, outputs a motion vector (MV) calculated by comparing the found data with the input image data. The motion vector is obtained by referring to at least one reference image frame. That is, the motion vector can be calculated by referring to a plurality of past and/or future image frames as in the conventional technology. In particular, the motion estimation unit 360 according to the current embodiment divides an image frame which is currently desired to be encoded, into a background area and an object area, and then, can perform motion estimation, by using a reference background image and a reference object image which are generated by the reference image generation unit from the previous image frames.

If the motion vector generated by the motion estimation unit 360 is transferred to the reference image generation unit 340, the reference image generation unit 340 outputs data of the reference image frame indicated by the motion vector, or a corresponding area of a reference background image or a reference object image, to the motion compensation unit 350.

Based on the input data, the motion compensation unit 350 generates a motion compensation value corresponding to the image data being currently encoded, and outputs the value.

The entropy encoding unit 370 receives inputs of the quantized transform coefficient values output from the transform encoding unit 320, and information on the motion vector output from the motion estimation unit 360, and also receives inputs of other information items required for decoding, such as coding-type information, quantization step information, provided by the encoding control unit 310. Then, the entropy encoding unit 370 outputs a bitstream which is finally obtained, by encoding the inputs.

An encoding operation for a plurality of input image frames will now be explained. A first image frame from a plurality of image frames is intra-prediction encoded, and then, the first image frame is restored and stored in the reference image generation unit 340. As will be described later, the reference image generation unit 340 has a storage unit for storing reference background images and reference object images, which are generated from previous image frames, as well as image frames restored after being encoded previously.

From an image frame which is input second, the motion estimation unit 360 divides the image frame being input, into units of blocks. Then, by using the image frame previously encoded, restored and stored in the reference image generation unit 340, the motion estimation unit 360 performs motion estimation, thereby obtaining motion information, such as a motion vector, for each block.

The reference image generation unit 340 divides each image frame in units of blocks into background blocks and object blocks, by using motion information of image frames. In order to separate a background area and an object area existing in an image frame, a variety of algorithms can be applied. For example, in the reference image generation unit 340, motion estimation of a current image frame is performed, and the magnitude of a motion vector of blocks existing in the current image frame is calculated. Then, a block having an amount of change equal to or greater than a predetermined threshold can be determined as an object block and a block having an amount of change less than the predetermined threshold can be determined as a background block. Also, the reference image generation unit 340 can calculate a global motion vector which is a representative value of motion vectors of blocks in one image frame, and then, determine a block in which the difference between the global motion vector and the motion vector of the block is equal to or greater than a predetermined threshold as an object block, and a block in which the difference is less than the predetermined threshold as a background block. In order to obtain the global motion vector, a histogram of each motion vector in one image frame may be obtained, and then, a mean value representing a plurality of motion vectors can be used as a global motion vector.

Also, the reference image generation unit 340 compares the background areas of the current image frame and a previous image frame, and then, by using a background area which the current image frame has but the previous image frame lacks, the reference image generation unit 340 replaces the background area of the previous image frame, and stores the updated background image in a storage unit as a reference background image. This process is repeatedly performed in each of input image frames, thereby continuously updating the reference background image.
Also, the reference image generation unit 340 separately stores a separated object block as a reference object image. If a storage space for storing an object block is limited, an object block which has been stored for the longest time is deleted when the storage space is full and a new object block is stored.

A detailed structure and operation of the reference image generation unit 340 will now be explained with reference to the drawings.

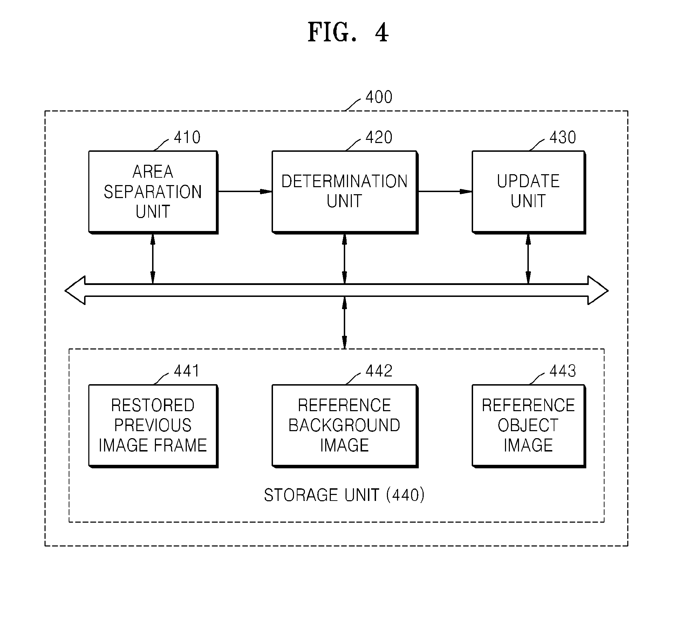

FIG. 4 is a detailed block diagram illustrating a structure of a reference image generation unit according to an embodiment of the present invention.
Referring to FIG. 4, the reference image generation unit 400 according to the current embodiment includes an area separation unit 410, a determination unit 420, an update unit 430, and a storage unit 440. The storage unit 440 stores a previous image frame 441 which is encoded previously, and then is restored. Also, the storage unit 440 stores a reference background image 442 which is formed of only a background image generated by updating a background area which any one image frame lacks, with a background area of another image frame, and a reference object image 443 which is formed of a separated object area.

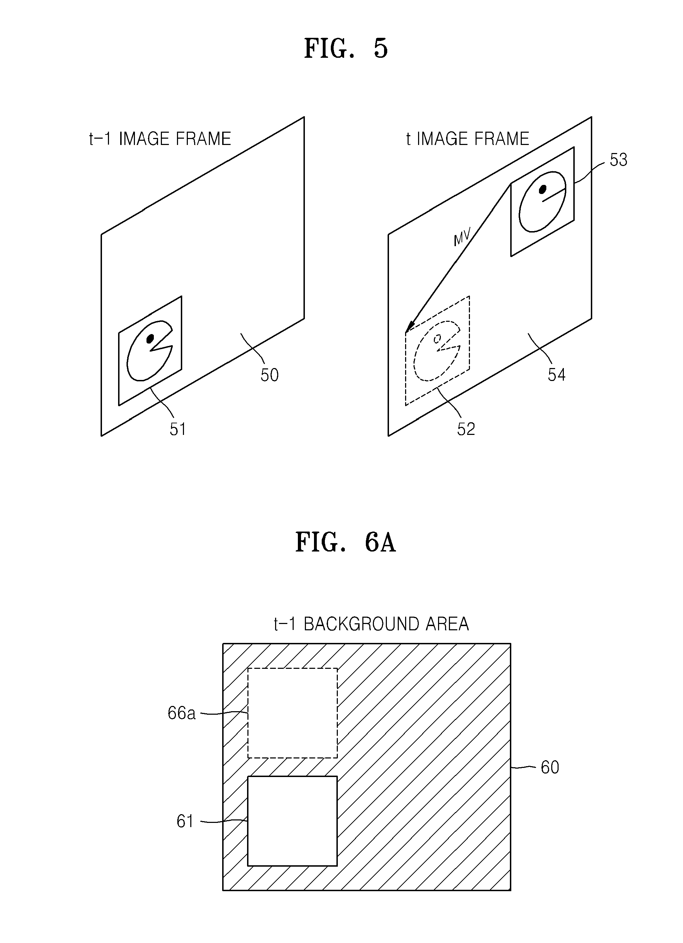

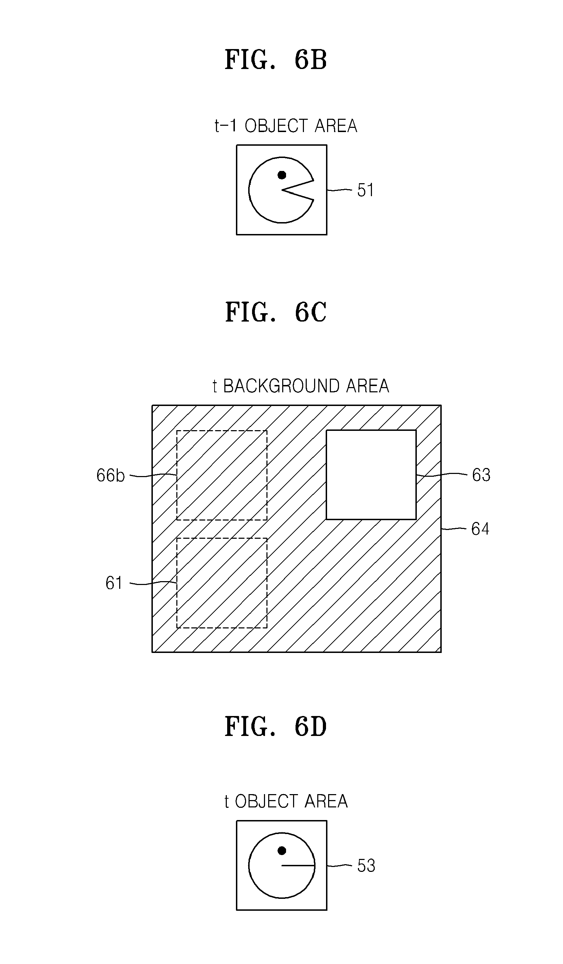

FIG. 5 is a diagram illustrating examples of two image frames sequentially input to an apparatus for encoding an image according to an embodiment of the present invention. FIGS. 6A and 6B are diagrams illustrating a background image and an object image, respectively, which are separated from an image frame input at an arbitrary time (t-1) (hereinafter referred to as "(t-1) image frame") of the image frames illustrated in FIG. 5 according to an embodiment of the present invention.
FIGS. 6C and 6D are diagrams illustrating a background image and an object image, respectively, which are separated from an image frame input at a time t (hereinafter referred to as "t image frame") of the image frames illustrated in FIG. 5 according to an embodiment of the present invention.

The area separation unit 410 calculates the magnitude of the motion vector of each block generated as the result of motion estimation in relation to blocks of a current image frame, and compares the magnitude of the block with a predetermined threshold, thereby separating a background area and an object area from the current image frame. For example, referring to FIG. 5, by using the result of motion estimation of the t image frame, the image separation unit 410 calculates the magnitude of the motion vector of each block in the t image frame. In this way, the image separation unit 410 can detect a block having a motion vector equal to or greater than the predetermined threshold, as a block 53 including a moving object. This is because a block having a moving object has a motion vector relatively greater than that of a background area. Similarly, the area separation unit 410 calculates the magnitude of the motion vector of each block in the (t-1) image frame, and by comparing the magnitude of the bock with the predetermined threshold, the area separation unit 410 can detect a block 51 including a moving object.

In order to determine an object existing in a panning image frame which occurs due to movement of an image pickup apparatus, such as a camera, the area separation unit 410 calculates a global motion vector representing motion vectors of blocks existing in the image frame, and may determine a block in which the difference between the global motion vector and the motion vector of the block is equal to or greater than a predetermined threshold, as an object block, and a block in which the difference is less than the predetermined threshold, as a background block. That is, in the case of the panning image, by determining the overall motion of the blocks of the image frame, the direction of the panning is determined, and then, by considering the determined panning direction, a block having a different motion is determined as an object area. Here, as the global motion vector, the mean value of the motion vectors of all the blocks in the image frame can be used.

Referring to FIGS. 6A through 6D, the area separation unit 410 divides the (t-1) image frame into an object area 61 and a background area 60, and stores the separated (t-1) object area 61 in the storage unit 440, as a reference object image. Also, the area separation unit 410 divides the t image frame into an object area 63 and a background area 64, and stores the separated t object area 63 in the storage unit 440 as another reference object image. As described above, an object image extracted from each image frame is sequentially stored in the storage unit 440, and if the storage space is full, a new object is stored, by replacing an object image which has been stored for the longest time.

The determination unit 420 compares the background area and object area separated from each image frame in the area separation unit 410, and determines an area which is a background area in both a current image frame and a previous image frame, an area which has changed from a background area to an object area, and an area which has changed from an object area to a background area.

Referring again to FIG. 5, an area 52 in the t image frame corresponding to the object area 51 of the (t-1) image frame becomes a background area as the object moves. Also, the object area 53 of the t image frame is a background area in the previous (t-1) image frame, but as the object moves, the background area is changed to the object area.

The update unit 430 updates a reference background image generated from the background areas of the previous image frames, by using the background area of the current image frame according to the result of the determination by the determination unit 420. More specifically, first, in relation to an area which is determined to be a background area both in the previous image frame and the current image frame, the clearness of a block of the previous image frame and the clearness of a block of the current image frame corresponding to the block of the previous image frame are calculated, and an area in the reference background image corresponding to the block is replaced by the clearer block. This is to generate a reference background image by using a clearer image, because a slightly blurred image due to delicate shaking of a camera may exist in image frames contiguous in time. In order to detect the clearness of an image, a variety of algorithms for detecting edges in the image can be used. This is because detecting an edge is easier in a clear image than in a blurred image.

In the current embodiment, as a method of detecting the clearness of an image, a method of extracting a high frequency component in an image is used. When a frequency component is detected, a variety of frequency transform methods, such as discrete cosine transform (DCT) or wavelet transform, can be used. The update unit 430 transforms an area which is determined to be a background both in the previous image frame and the current image frame, into the frequency domain, and then, by comparing the high frequency component of the current image frame with the high frequency component of the previous image frame, the update unit 430 selects an image frame having a higher high frequency component, as an image having clearer picture quality. Then, by replacing the corresponding area of the reference background image frame with the image frame having the higher high frequency component, the update unit 430 updates the reference background image. For example, referring to FIGS. 6A and 6C, the update unit 430 transforms a block 66a and 66b which is determined to be a background area both in the (t-1) image frame and the t image frame, into the frequency domain, and by comparing the high frequency components of the blocks 66A and 66B, the update unit 430 selects a block having a higher high frequency component. The update unit 430 replaces the area of the reference background image with the selected block, thereby updating the reference background image.

Also, by using an area which is determined to be an object area in the previous image frame and a background area in the current image frame, the update unit 430 replaces the corresponding area of the reference background image, thereby updating the reference background image. Referring again to FIGS. 6A and 6C, an area indicated by reference number 61 is an object area in the (t-1) image frame and is changed to a background area in the t image frame. Thus, the area which has changed from the object area to the background area is a part which is hidden by an object in the previous reference background image, thereby being omitted in the previous reference background image. The update unit 430 replaces the area hidden by an object in the previous image frame, with a corresponding background area of the current image frame, thereby updating the reference background image. The update unit 430 repeatedly performs this process for input image frames, thereby continuously updating the reference background image 442 stored in the storage unit 440.

Also, in the storage unit 440, a variety of shapes of reference object images 443 extracted from each image frame are stored. For example, as illustrated in FIGS. 6B and 6D, a variety of shapes of reference object images 51 and 53 separated from each image frame are stored as reference object images 443. The reference background image 442 generated by the update unit 430 and the reference object images 443 separated from each image frame are used for motion estimation and compensation of future image frames. In this way, when object images separated from each image frame are separately stored, an object having changing motion can be more accurately predicted by using the reference object image.

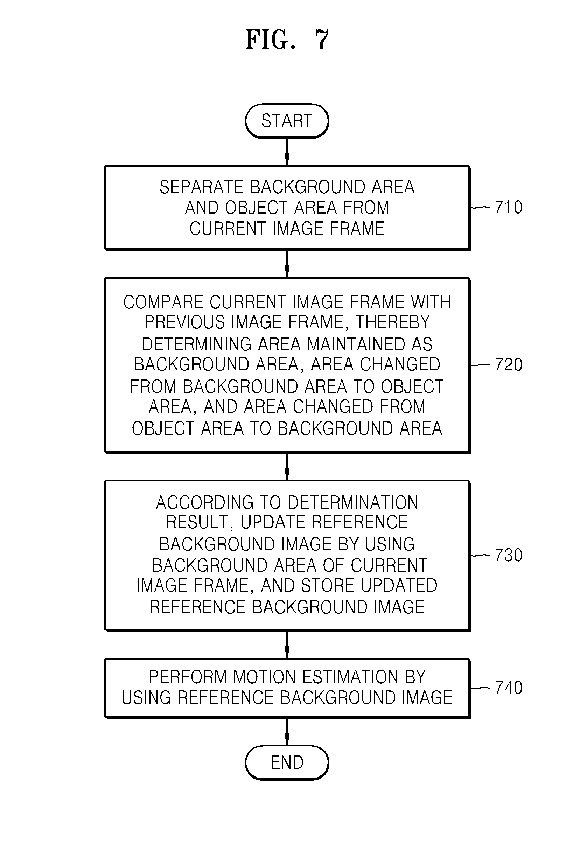

FIG. 7 is a flowchart illustrating a method of encoding an image according to an embodiment of the present invention.

Referring to FIG. 7, in operation 710, a current image frame is divided into a background area and an object area. As described above, the background and the object can be identified by detecting the magnitude of the motion vector of each of blocks of the current image frame, and comparing the magnitude of each block with a predetermined threshold. Also, a global motion vector representing the motion vectors of all blocks in the current image frame is calculated and then, a block in which the difference between the global motion vector and the motion vector of the block is equal to or greater than a predetermined threshold, may be determined as an object block, and the remaining blocks may be determined as background blocks.

In operation 720, the current image frame and the previous image frame are compared, thereby determining an area which is maintained as a background area in both the current image frame and the previous image frame, an area which is changed from a background area to an object area, and an area which is changed from an object area to a background area.

In operation 730, in the case of the area which is maintained as a background area in both the current image frame and the previous image frame, an image having higher clearness is selected from the current image frame and the previous image frame, and by using the selected image, the reference background image is replaced, thereby updating the reference background image. Also, in the case of the area which is changed from the background area to the object area, the object area of the current image frame is stored in the storage unit 440 separately as a reference object area. In the case of the area which is changed from the object area to the background area, the area is omitted in the background area of the previous image frame, and thus by using the background area of the previous image frame, the area of the background omitted in the previous image frame is filled, thereby updating the reference background image.

In operation 740, the above process is repeatedly performed for subsequent image frames, the reference background image and the reference object image are continuously updated. In this way, by using the reference background image and the reference object image generated through the above process before processing a current image frame, motion estimation is performed, thereby generating a predicted image, and the difference between the predicted image and the original image is transformed, thereby performing quantization and entropy encoding.

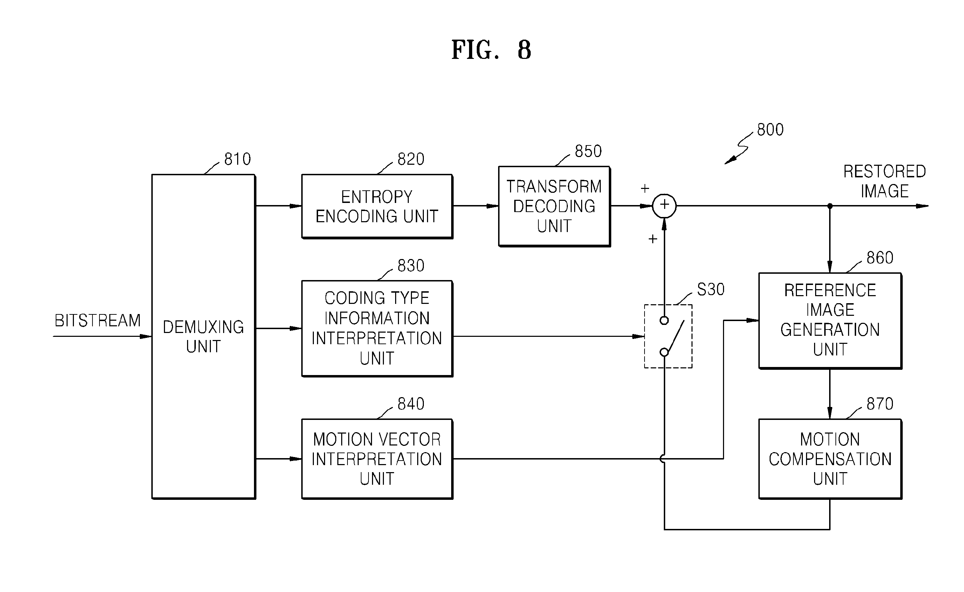

FIG. 8 is a block diagram illustrating a structure of an apparatus for decoding an image according to an embodiment of the present invention.

Referring to FIG. 8, the apparatus for decoding an image 800 according to the current embodiment is an apparatus for receiving a bitstream encoded by the encoding apparatus 300 illustrated in FIG. 3, and decoding the bitstream, and is composed of a demuxing unit 810 for demuxing a bitstream, an entropy decoding unit 820, and a transform decoding unit 850. Also, the apparatus for decoding an image 800 includes a coding type information interpretation unit 830 for interpreting coding-type information, and a motion vector interpretation unit 840 for interpreting a motion vector.

A bitstream is demuxed by the demuxing unit 810 into entropy-encoded quantized transform coefficients, motion vector information, coding type information, and the like. The entropy decoding unit 820 entropy-decodes the entropy-encoded transform coefficients, and outputs quantized transform coefficients. The transform decoding unit 850 transform-decodes the quantized transform coefficients. Restored image data is stored in a reference image generation unit 860 for motion compensation.

Meanwhile, the coding type information interpretation unit 830 finds the coding type of the bitstream, and if the type is an inter type which requires motion compensation, the coding type information interpretation unit 830 closes a third switch (S30). Accordingly, a motion compensation value output from a motion compensation unit 870 is added to the data output from the transform decoding unit 850, and restored image data is obtained. The motion vector interpretation unit 840 provides a position indicated by a motion vector obtained from the motion vector information, and the motion compensation unit 870 generates a motion compensation value from reference image data indicated by the motion vector, and outputs the motion compensation value.

In particular, the reference image generation unit 860 generates a reference background image and a reference object image, by using previously restored image frames, and stores the generated images. Except that restored images are used by the reference image generation unit 860, the structure and operation of the reference image generation unit 860 is similar to that of the reference image generation unit 400 illustrated in FIG. 4, of the image encoding apparatus.

That is, the reference image generation unit 860 separates a background area and an object area from each of a first image frame and a second image frame which are restored before decoding a current image frame. By comparing the first image frame and the second image frame, the reference image generation unit 860 determines an area which is maintained as a background area both in the first image frame and the second image frame, an area which has changed from a background area to an object area, and an area which has changed from an object area to a background area. Then, according to the result of the determination, the reference image generation unit 860 updates a reference background image generated from the background areas of the previously restored image frames, by using the backgrounds of the first and second image frames. As described above, in the case of the area which is maintained as a background area both in the first image frame and the second image frame, an image having higher clearness is selected from the first image frame and the second image frame, and by using the selected image, the reference background image is replaced, thereby updating the reference background image. Also, in the case of the area which has changed from the background area to the object area, the object area of the second image frame is stored in a storage unit of the reference image generation unit 860 separately as a reference object area. In the case of the area which has changed from the object area to the background area, the area is omitted in the background area of the first image frame, and by using the background area of the second image frame, the background area omitted in the first image frame is filled, thereby updating the reference background image.

When the image frame which is determined in the coding type information interpretation unit 830 and is currently being decoded uses a reference background image or reference object image generated from previous image frames, the motion compensation unit 870 performs motion compensation, by using the reference background image or reference object image generated by the reference image generation unit 840, and generates a predicted image.

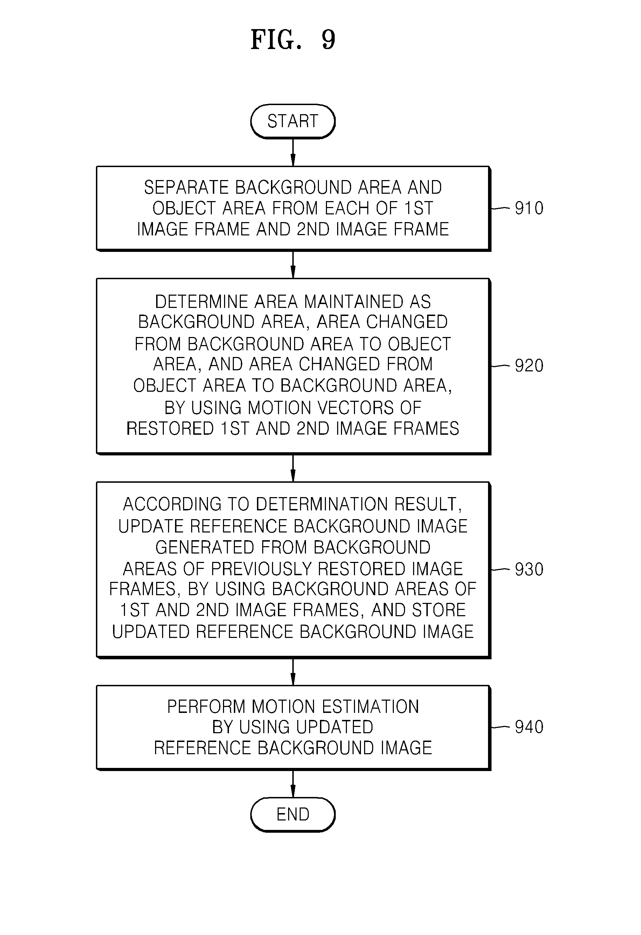

FIG. 9 is a flowchart illustrating a method of decoding an image according to an embodiment of the present invention.

Referring to FIG. 9, in operation 910, a background area and an object area are separated in each of at least two image frames, including a first image frame and a second image frame, which are restored prior to a current image frame.
In operation 920, by comparing the restored first and second image frames, an area which is maintained as a background area both in the first image frame and the second image frame, an area which changes from a background area to an object area, and an area which changes from an object area to a background area are determined.

In operation 930, according to the result of the determination of operation 920, a reference background image generated from the background areas of all image frames is updated by using the background areas of the first image frame and the second image frame, and the updated reference background image is stored.
In operation 940, by using the updated reference background image, motion compensation of the current image frame is performed, thereby generating a restored predicted image, and the restored predicted image is added to a residual component in the bitstream, thereby restoring an image.

According to the present invention as described above, without a need to increase the size of a memory for storing a reference image, the complexity of computation required when motion estimation and compensation are performed can be reduced, and encoding efficiency can be increased when multiple reference frames are used. That is, by using previous image frames, a reference background image and a reference object image can be continuously updated and stored. Then, by using the reference background image and reference object image, motion estimation and compensation can be performed. In this way, without a need to store multiple reference images and by using only an updated reference background image, a predicted image can be generated and encoding efficiency is enhanced.

Also, in the case of an object, by using a reference object image, motion estimation and compensation can be easily performed without increasing a search area. In the case of an object whose shape changes, by using a plurality of reference object images stored in a storage unit, a predicted image can be generated, thereby increasing encoding efficiency.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of encoding an image comprising:
dividing a current image frame into a background area and an object area;
comparing the current image frame with a previous image frame, thereby determining whether a background area or an object area has changed between the current image frame and the previous image frame;
according to the result of the determination, updating a reference background image which is generated from backgrounds of previous image frames, by using the background area of the current image frame, and storing the updated reference background image; and
performing motion estimation of an image frame subsequent to the current image frame by using the updated reference background image.

2. The method of claim 1, wherein the dividing of the current image frame into the background area and the object area comprises:
performing block based motion estimation of the current image frame, and generating motion vectors;
calculating the magnitudes of each of the motion vectors of the current image frame; and
for a block in which the magnitude of the motion vector of the block is equal to or greater than a predetermined threshold, determining that the block is included in an object area, and for a block in which the magnitude of the motion vector of the block is less than the predetermined threshold, determining that the block is included in a background area.

3. The method of claim 1, wherein the dividing of the current image frame into the background area and the object area comprises:
performing block based motion estimation of the current image frame, and generating motion vectors;
calculating a global motion vector representing all motion vectors of blocks in the current image frame; and
among the blocks in the current image frame, determining blocks for which the difference between the global motion vector and the motion vector of the block is equal to or greater than a predetermined threshold, as an object area, and determining a block for which the difference between the global motion vector and the motion vector of the block is less than the predetermined threshold, as a background area.

4. The method of claim 1, wherein the updating of the reference background image comprises:
calculating clearness of an area which is determined to be a background area in both the current image frame and the previous image frame;
selecting a background area having higher clearness from the background areas of the current image frame and the previous image frame; and
replacing an area of the reference background image, corresponding to the selected background area, with the selected background area, thereby updating the reference background image.

5. The method of claim 4, wherein the selecting of background area having higher clearness comprises:
transforming the current image frame and the previous image frame into frequency domain; and
comparing the high frequency components of the current image frame and the previous image frame, and selecting a background area having higher high frequency components of between the current image frame and the previous image frame, as the background area having higher clearness.

6. The method of claim 1, wherein in the updating of the reference background image, an area of the reference background image corresponding to a background area of the current image frame, which is determined to be an object area in the previous image frame and a background area in the current image frame, is replaced with the background area of the current image frame, thereby updating the reference background image.

7. The method of claim 1, further comprising storing an object area of the current image frame, which is determined to be a background area in the previous image frame and an object area in the current image frame, as reference object image.

8. An apparatus for encoding an image comprising:
an area separation unit which divides a current image frame into a background area and an object area;
a determination unit which compares the current image frame with a previous image frame, thereby determining whether a background area or an object area changes between the current image frame and the previous image frame;
an update unit which updates a reference background image which is generated from backgrounds of previous image frames, by using the background area of the current image frame, according to the result of the determination, and storing the updated reference background image; and
a motion estimation unit which performs motion estimation of an image frame subsequent to the current image frame, by using the updated reference background image.

9. The apparatus of claim 8, wherein the area separation unit comprises:
a motion vector magnitude calculation unit which calculates the magnitude of a motion vector of each of blocks of the current image frame, by using motion vectors generated by performing block based motion estimation of the current image frame; and
an area determination unit which determines for a block in which the magnitude of a motion vector of the block is equal to or greater than a predetermined threshold, that the block is included in an object area, and which determines, for a block in which the magnitude of a motion vector of the block is less than the predetermined threshold, that the block is included in a background area.

10. The apparatus of claim 8, wherein the area separation unit comprises:
a global motion vector calculation unit which calculates a global motion vector representing motion vectors of all of blocks of the current image frame; and
an area determination unit which determines, among the blocks of the current image frame, a block for which the difference between the global motion vector and a motion vector of the block is equal to or greater than a predetermined threshold, as an object area, and which determines a block for which the difference between the global motion vector and a motion vector of the block is less than the predetermined threshold, as a background area.

11. The apparatus of claim 8, wherein the update unit comprises:
an update area selection unit which calculates clearness of an area which is determined to be a background area in both the current image frame and the previous image frame, and which selects a background area having higher clearness from background areas of the current image frame and the previous image frame; and
an updating unit which replaces an area in the reference background image, corresponding to the selected background area, with the selected background area, thereby updating the reference background image.

12. The apparatus of claim 11, wherein the update area selection unit transforms the current image frame and the previous image frame into frequency domain, compares the high frequency components of the current image frame and the previous image frame, and selects a background area having higher high frequency components of between the current image frame and the previous image frame, as the background area having higher clearness.

13. The apparatus of claim 8, wherein the update unit replaces an area of the reference background image corresponding to a background area of the current image frame, which is determined to be an object area in the previous image frame and a background area in the current image frame, with the background area of the current image frame, thereby updating the reference background image.

14. The apparatus of claim 8, wherein the storage unit stores an object area of the current image frame, which is determined to be a background area in the previous image frame and an object area in the current image frame, as a reference object image.

15. A method of decoding an image comprising:
separating a background area and an object area from each of at least two image frames, including a first image frame and a second image frame, restored before a current image frame is decoded;
comparing the restored first image frame and second image frame, and determining whether or not a background area or an object area changes between the first image frame and the second image frame;
according to the result of the determination, updating a reference background image which is generated from background areas of previously restored image frames, by using the backgrounds of the first image frame and the second image frame, and storing the updated reference background image; and
by using the updated reference background image, performing motion compensation of the current image frame.

16. The method of claim 15, wherein the separating of the background area and object area from each of the first image frame and the second image frame comprises:
by using motion vectors of blocks of the first image frame and the second image frame included in an input bitstream, determining the magnitude of the motion vector of each of the blocks included in the first image frame and the second image frame; and
for a block in which the magnitude of a motion vector of the block is equal to or greater than a predetermined threshold, determining that the block is included in an object area, and for a block in which the magnitude of a motion vector of the block is less than the predetermined threshold, determining that the block is included in a background area.

17. The method of claim 15, wherein the separating of the background area and object area from each of the first image frame and the second image frame comprises:
by using motion vectors of the first image frame and the second image frame included in the input bitstream, calculating a first global motion vector representing the motion vectors of the blocks in the first image frame, and a second global motion vector representing the motion vectors of the blocks in the second image frame; and
for each of the blocks of the first image frame and the second image frame, comparing the motion vector of the block with a corresponding one of the first global motion vector and the second global motion vector, and determining a block in which the difference between the global motion vector and the motion vector of the block is equal to or greater than a predetermined threshold, as an object area, and determining a block in which the difference between the global motion vector and the motion vector of the block is less than the predetermined threshold, as a background area.

18. The method of claim 15, wherein updating of the reference background image comprises:
calculating clearness of an area which is determined to be a background area both in the first image frame and the second image frame;
selecting a background area having higher clearness from the background areas of the first image frame and the second image frame; and
replacing an area in the reference background image corresponding to the selected background area, with the selected background area, thereby updating the reference background image.

19. The method of claim 18, wherein the selecting of the background area having higher clearness comprises:
transforming the first image frame and the second image frame into frequency domain; and
comparing high frequency components of the first image frame and the second image frame, and selecting a background area having higher high frequency components of between the first image frame and the second image frame, as the background area having higher clearness.

20. The method of claim 15, wherein in the updating of the reference background image, an area of the reference background image corresponding to a background area of the second image frame, which is determined to be an object area in the first image frame and a background area in the second image frame, is replaced by the background area of the second image frame, thereby updating the reference background image.

21. The method of claim 15, further comprising storing an object area of the second image frame, which is determined to be a background area in the first image frame and an object area in the second image frame, as a reference object image.

22. An apparatus for decoding an image comprising:
an area separation unit which separates a background area and an object area from each of at least two image frames, including a first image frame and a second image frame, restored before a current image frame is decoded;
a determination unit which compares the restored first image frame and second image frame, and which determines whether or not a background area or an object area changes between the first image frame and the second image frame;
an update unit which updates a reference background image which is generated from background areas of previously restored image frames, by using backgrounds of the first image frame and the second image frame, according to the result of the determination;
a storage unit which stores the updated reference background image; and
a motion compensation unit which performs motion compensation of the current image frame, by using the updated reference background image.

23. The apparatus of claim 22, wherein the area separation unit comprises:
a motion vector magnitude calculation unit which calculates the magnitude of a motion vector of each of the blocks included in the first image frame and the second image frame, by using motion vectors of each of the blocks of the first image frame and the second image frame included in an input bitstream; and
an area determination unit, which determines, for a block in which the magnitude of the motion vector of the block is equal to or greater than a predetermined threshold, that the block is included in an object area, and which determines, for a block in which the magnitude of the motion vector of the block is less than the predetermined threshold, that the block is included in a background area.

24. The apparatus of claim 22, wherein the area separation unit comprises:
a global motion vector calculation unit which calculates a first global motion vector representing motion vectors of the blocks in the first image frame, and a second global motion vector representing the motion vectors of the blocks in the second image frame, by using the motion vectors of each of the blocks of the first image frame and the second image frame included in the input bitstream; and
an area determination unit which compares, for each of the blocks of the first image frame and the second image frame, the motion vector of the block with a corresponding one of the first global motion vector and the second global motion vector, and which determines a block in which the difference between the global motion vector and the motion vector of the block is equal to or greater than a predetermined threshold, as an object area, and determining a block in which the difference between the global motion vector and the motion vector of the block is less than the predetermined threshold, as a background area.

25. The apparatus of claim 22, wherein the update unit comprises:
an update area selection unit which calculates clearness of an area which is determined to be a background area both in the first image frame and the second image frame, and which selects a background area having higher clearness from the background areas of the first image frame and the second image frame; and
an updating unit which replaces an area in the reference background image corresponding to the selected background area, with the selected background area, thereby updating the reference background image.
